(19) Europäisches Patentamt
European Patent Office
Office européen des brevets

(11) EP 3 730 422 B1

(12) EUROPEAN PATENT SPECIFICATION

(45) Date of publication and mention of the grant of the patent:
**22.01.2025 Bulletin 2025/04**

(21) Application number: **18891993.0**

(22) Date of filing: **14.12.2018**

(51) International Patent Classification (IPC):
***B65D 65/02*** *(2006.01)* ***C08J 5/18*** *(2006.01)*
***C08L 29/04*** *(2006.01)* ***C11D 17/04*** *(2006.01)*
*C08L 3/08* *(2006.01)* *C08K 5/053* *(2006.01)*

(52) Cooperative Patent Classification (CPC):
(C-Sets available)
**C11D 17/043; C08J 5/18; C08L 29/04;**
C08F 216/06; C08J 3/18; C08J 2329/04;
C08J 2403/02; C08J 2403/06; C08L 2205/025;
C08L 2205/03; Y02W 90/10 (Cont.)

(86) International application number:
**PCT/JP2018/046138**

(87) International publication number:
**WO 2019/124262 (27.06.2019 Gazette 2019/26)**

(54) **MEDICINE PACKAGING FILM AND PACKAGE**

MEDIZINISCHE VERPACKUNGSFOLIE UND VERPACKUNG

FILM POUR EMBALLAGE DE MÉDICAMENT, ET EMBALLAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.12.2017 US 201715850303**

(43) Date of publication of application:
**28.10.2020 Bulletin 2020/44**

(73) Proprietor: **Sekisui Chemical Co., Ltd.**
**Osaka 530-8565 (JP)**

(72) Inventors:
- **IEDA, Yasuyuki**
  **Chita-gun**
  **Aichi 470-2196 (JP)**
- **NGUYEN, Vinh**
  **Dallas, Texas 75234 (US)**
- **CARRIER, Paula**
  **Dallas, Texas 75234 (US)**

(74) Representative: **Ter Meer Steinmeister & Partner**
**Patentanwälte mbB**
**Nymphenburger Straße 4**
**80335 München (DE)**

(56) References cited:
**WO-A1-2016/035671** **WO-A1-2017/040991**
**WO-A1-2017/180867** **WO-A2-2018/081494**
**WO-A2-2018/081494** **CN-A- 105 694 321**
**JP-A- 2017 531 088** **JP-A- H 051 198**
**JP-A- H06 248 150** **JP-A- H08 269 500**
**JP-A- H08 269 500** **US-A1- 2004 161 559**
**US-A1- 2014 110 301** **US-A1- 2017 218 146**

EP 3 730 422 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 29/04, C08K 5/053, C08L 3/08;**
**C08L 29/04, C08K 5/053, C08L 3/08, C08L 29/04;**
C08F 216/06, C08F 218/08, C08F 220/585;
C08F 216/06, C08F 218/08, C08F 226/10

## Description

### Technical Field

The present invention relates to a chemical product packaging film comprising a polyvinyl alcohol-based film, and a package having the chemical product packaging film.

### Background Art

A chemical product packaging film comprising a polyvinyl alcohol-based film has water solubility and is widely used as a packaging material for containing various chemical products such as agricultural chemicals, chemical products, dyes, detergents, fertilizers, cosmetics, and sanitary products. Using the water solubility of the film, such a packaging material is used in applications where a packaging material is directly introduced into an aqueous medium while containing a chemical product, and decomposed or dissolved for use and in applications where a packaging material opened at the time of use is washed away with water as it is, for disposal.

In a chemical product packaging film, the tension of the film is lost over time, and the appearance and the feel may deteriorate, and therefore it is desired that the tension is not impaired over a long period. Therefore, conventionally, for example, as disclosed in International Publication No. WO 2017/043510 (hereinafter referred to as "Patent Literature 1"), an attempt has been made to maintain tension over a long period by blending a polyhydric alcohol and setting the content ratio of the polyhydric alcohol to a polyvinyl alcohol-based resin higher than the content ratio of a polyhydric alcohol in a liquid detergent.

In addition, JP 2002-53727 A (hereinafter referred to as "Patent Literature 2") discloses that in order to make solubility, process passing properties, low odor properties, and the like excellent, a saccharide is further blended in a polyvinyl alcohol-based film containing polyvinyl alcohol and a plasticizer. In Patent Literature 2, it is described that oxidized cornstarch is preferred as the saccharide.

However, in the chemical product packaging film shown in Patent Literature 1, although the tension of the film is easily maintained over a long period, the chemical resistance to liquid detergents and the like is low, and it is difficult to maintain water solubility over a long period.

In addition, in Patent Literature 2, various saccharides are disclosed, and the chemical resistance to liquid detergents and the like often cannot be sufficiently improved depending on the saccharide used. Further, maintaining the tension of the film is not shown, and in Patent Literature 2, it is difficult to improve chemical resistance, and maintain water solubility well over a long period, while maintaining the tension of the film.

Further, many of the saccharides illustrated in Patent Literature 2 have low cold water solubility, such as oxidized cornstarch, and the saccharide may remain as insoluble matter when the resin composition is dissolved in water in the manufacturing process. In a film manufacturing process, a filter is often used for foreign substance removal, but clogging may occur in the filter due to insoluble matter, such as a saccharide.

In addition, US 2017/218146 A1 (hereinafter referred to as "Patent Literature 3") discloses a water-soluble film suitable for thermoforming deep-drawn profiles, comprising a water-soluble polyvinyl alcohol resin and plasticizer. The films further comprise a hydroxyethyl modified starch having an amylose content of approximately 25% as shown in Table 2.

### Citation List

#### Patent Literature

PTL 1: WO 2017/043510 A1
PTL 2: JP 2002- 53727 A
PTL 3: US 2017/218146 A1

### Summary of Invention

#### Technical Problem

Therefore, it is an object of the present invention to provide a chemical product packaging film in which the chemical resistance is improved, and the water solubility is well maintained over a long period, while the tension of the film is maintained over a long period, without causing problems in the manufacturing process.

Solution to Problem

The present invention provides a chemical product packaging film comprising a polyvinyl alcohol resin, a plasticizer, and water-soluble starch,

the water-soluble starch having solubility in which the water-soluble starch dissolves when stirred in water having a concentration of the starch of 10% by mass at a temperature of 50°C for 30 minutes, a content of the water-soluble starch being 4% by mass or less based on the total mass of the chemical product packaging film, wherein
the chemical product packaging film is for packaging a liquid detergent, and
the chemical product packaging film has a degree of swelling, measured according to the method in the description, of less than 20% for the liquid detergent, and a

package comprising the chemical product packaging film.

Advantageous Effects of Invention

According to the present invention, such a product packaging film in which the chemical resistance is improved, and the water solubility is well maintained over a long period, while the tension of the film is maintained over a long period, without causing problems in the manufacturing process is provided.

Description of Embodiments

Embodiments of the present invention will be described in more detail below.

[Chemical product Packaging Film]

The chemical product packaging film of the present invention contains a polyvinyl alcohol resin, a plasticizer, and water-soluble starch. The components will be described in more detail below.

(Water-Soluble Starch)

The water-soluble starch used in the present invention has solubility in which the water-soluble starch dissolves when stirred in water having a concentration of the starch of 10% by mass at a temperature of 50°C for 30 minutes. In the present invention, by using the water-soluble starch having such solubility, the chemical resistance is improved while tension is provided to the chemical product packaging film over a long time. By improving the chemical resistance, the water solubility of the chemical product packaging film is well maintained even after the chemical product packaging film is in contact with a chemical product over a long period. In addition, when the water-soluble starch has the above solubility, the occurrence of problems in terms of the manufacturing process, such as the clogging of a filter, due to insoluble matter is prevented.

The details of a method for determining whether the water-soluble starch has solubility or not are as described in Examples.

The solubility of the water-soluble starch is preferably 11.1 to 25 g/100 $gH_2O$, more preferably 12 to 20 g/100 $gH_2O$, further preferably 12.3 to 17.6 g/100 $gH_2O$. By using the water-soluble starch having solubility that is within these ranges, the tension of the film can be kept at a good level, while the water solubility of the film is well maintained even after the film is in contact with a chemical product over a long period.

Examples of the water-soluble starch include a starch decomposition product obtained by decomposing starch so as to lower molecular weight, and a derivative of starch obtained by introducing a functional group into a hydroxyl group of a glycose constituting starch. Of these, a derivative of starch is preferred. Specific examples of the derivative of starch include esterified or etherified starch. Of these, hydroxyalkylated starch is preferred, and particularly, hydroxyethylated starch, hydroxypropylated starch, or both of these are more preferably used.

The water-soluble starch can be allowed to have the above-described solubility by appropriately adjusting the amount and type of the functional group to be introduced, or the extent to which starch is decomposed . For the water-soluble starch, commercial products can also be used. Specific examples thereof include "Amycol NS" from Nippon Starch Chemical Co., Ltd. and "Staramic 747" and "Staramic 105" from TATE & LYLE.

One water-soluble starch may be used singly, or two or more water-soluble starches may be used in combination.

In the chemical product packaging film of the present invention, the content of the water-soluble starch is 4% by mass or less based on the total amount of the chemical product packaging film. When the content exceeds 4% by mass, it is difficult to provide tension to the chemical product packaging film over a long period.

The content of the water-soluble starch is preferably 3% by mass or less, more preferably 2.5% by mass or less, and further preferably 2% by mass or less from the viewpoint of easily providing tension to the chemical product packaging film. The content of the water-soluble starch is preferably 0.1% by mass or more, more preferably 0.5% by mass or more, further preferably 0.8% by mass or more, and still further preferably 1% by mass or more from the viewpoint of further improving the chemical resistance of the chemical product packaging film.

(Polyvinyl Alcohol Resin)

The chemical product packaging film of the present invention contains a polyvinyl alcohol resin (PVA resin). The PVA resin is obtained by polymerizing a vinyl ester to obtain a polymer, and then saponifying, that is, hydrolyzing, the polymer, according to a conventionally known method. For the saponification, an alkali or an acid is generally used, but an alkali is preferably used. Only one PVA resin may be used, or two or more PVA resins may be used in combination.

Examples of the vinyl ester include vinyl acetate, vinyl formate, vinyl propionate, vinyl butyrate, vinyl pivalate, vinyl versatate, vinyl laurate, vinyl stearate, and vinyl benzoate. The method for polymerizing the vinyl ester is not particularly limited. Examples of the method include a solution polymerization method, a bulk polymerization method, and a suspension polymerization method.

The PVA resin may be unmodified PVA or modified PVA. Examples of the unmodified PVA include unmodified PVA obtained by saponifying a polyvinyl ester. Examples of the modified PVA include modified PVA obtained by saponifying a polymer of a vinyl ester and another unsaturated monomer.

Examples of the other unsaturated monomer include monomers other than vinyl esters, having a carbon-carbon double bond such as a vinyl group. Specific examples include olefins, (meth)acrylic acid and salts thereof, (meth) acrylates, unsaturated acids other than (meth)acrylic acid, and salts and esters thereof, (meth)acrylamides, N-vinylamides, vinyl ethers, nitriles, vinyl halides, allyl compounds, vinylsilyl compounds, isopropenyl acetate, sulfonic acid group-containing compounds, and amino group-containing compounds.

Examples of the olefins include ethylene, propylene, 1-butene, and isobutene. Examples of the (meth)acrylates include methyl (meth)acrylate, ethyl (meth)acrylate, n-propyl (meth)acrylate, i-propyl (meth)acrylate, n-butyl (meth) acrylate, and 2-ethylhexyl (meth)acrylate.

Examples of the unsaturated acids other than (meth)acrylic acid, and salts and esters thereof include maleic acid and salts thereof, maleates, itaconic acid and salts thereof, itaconates, methylenemalonic acid and salts thereof, and methylenemalonates.

Examples of the (meth)acrylamides include acrylamide, n-methylacrylamide, N-ethylacrylamide, and N,N-dimethylacrylamide. Examples of the N-vinylamides include N-vinylpyrrolidone. Examples of the vinyl ethers include methyl vinyl ether, ethyl vinyl ether, n-propyl vinyl ether, i-propyl vinyl ether, and n-butyl vinyl ether.

Examples of the nitriles include (meth)acrylonitrile. Examples of the vinyl halides include vinyl chloride and vinylidene chloride. Examples of the allyl compounds include allyl acetate and allyl chloride. Examples of the vinylsilyl compounds include vinyltrimethoxysilane.

Examples of the sulfonic acid group-containing compounds include (meth)acrylamidoalkanesulfonic acids such as (meth)acrylamidopropanesulfonic acid, and salts thereof, and olefinsulfonic acids such as ethylenesulfonic acid, allylsulfonic acid, and methallylsulfonic acid, or salts thereof.

Examples of the amino group-containing compounds include allylamine, polyoxyethylene allylamine, polyoxypropylene allylamine, polyoxyethylene vinylamine, and polyoxypropylene vinylamine.

The modified PVA may be modified PVA obtained by adding a carboxyl group, a sulfonic acid group, an amino group, or a pyrrolidone group, to PVA by graft polymerization .

For the modified PVA, particularly, modified PVA modified with at least one hydrophilic group selected from the group consisting of a sulfonic acid group, a pyrrolidone ring group, an amino group, and a carboxyl group is preferred. In other words, specific examples of preferred modified PVA include sulfonic acid group-modified PVA, pyrrolidone ring group-modified PVA, amino group-modified PVA, and carboxyl group-modified PVA. These hydrophilic groups also include, in addition to these functional groups, salts such as sodium salts and potassium salts of these functional groups.

The sulfonic acid group-modified PVA is not particularly limited as long as it is sulfonic acid group-modified PVA in which a sulfonic acid group is introduced by modification. It is preferably sulfonic acid group-modified PVA in which a sulfonic acid group is bonded to a polymer main chain via a linking group. Examples of the above linking group include an amide group, an alkylene group, an ester group, and an ether group. Especially, a combination of an amide group and an alkylene group is preferred. In order to make the linking group such a combination of an amide group and an alkylene group, the above-described (meth)acrylamidoalkanesulfonic acid or a salt thereof may be used as the unsaturated monomer.

The above sulfonic acid group preferably comprises a sulfonate and is particularly preferably a sodium sulfonate group. When the above modified PVA is sodium sulfonate-modified PVA, the sodium sulfonate-modified PVA preferably has a constituent unit represented by the following formula (1):

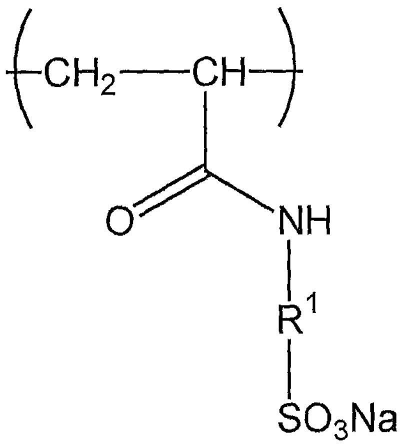

(1)

wherein $R^1$ represents an alkylene group having 1 to 4 carbon atoms.

The pyrrolidone ring group-modified PVA is not particularly limited, as long as it is pyrrolidone ring group-modified PVA in which a pyrrolidone ring group is introduced by modification. The pyrrolidone ring group-modified PVA preferably has a constituent unit represented by the following formula (2). In order to obtain pyrrolidone ring group-modified PVA having such a constituent unit, for example, N-vinylpyrrolidone may be used as the other unsaturated monomer.

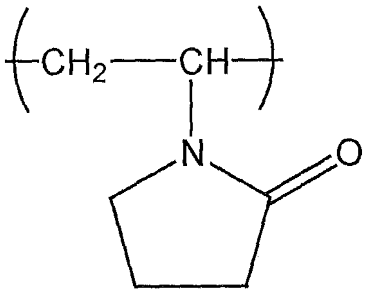

(2)

The amino group-modified PVA is not particularly limited as long as it is amino group-modified PVA in which an amino group is introduced by modification. The amino group-modified PVA preferably has a constituent unit represented by the following formula (3):

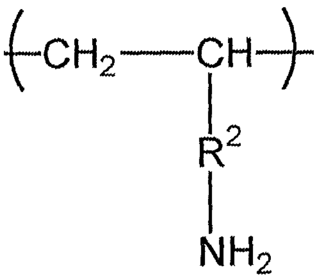

(3)

wherein $R^2$ represents a single bond or an alkylene group having 1 to 10 carbon atoms.

The carboxyl group-modified PVA is not particularly limited as long as it is carboxyl group-modified PVA in which a carboxyl group is introduced by modification. The carboxyl group-modified PVA preferably has a constituent unit represented by the following formula (4-1), (4-2), or (4-3):

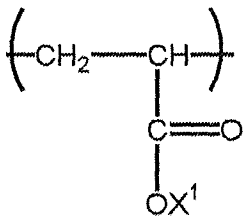 (4-1) 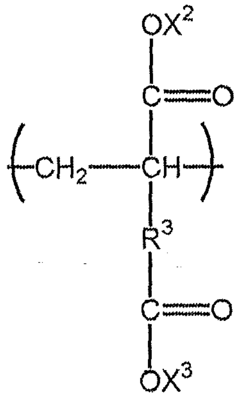 (4-2) 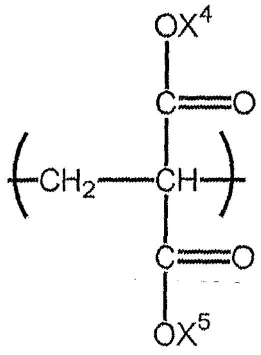 (4-3)

wherein $X^1$, $X^2$, $X^3$, $X^4$, and $X^5$ each independently represent a hydrogen atom, a metal atom, or a methyl group. In other words, the carboxyl group in the present specification also includes salts and methyl esters of the carboxyl group. Examples of the metal atom include a sodium atom. In the above formula (4-2), $R^3$ represents an alkylene group having 1 to 10 carbon atoms.

In the modified PVA modified with at least one hydrophilic group selected from the group consisting of a sulfonic acid group, a pyrrolidone ring group, an amino group, and a carboxyl group, the amount of hydrophilic group modification is, for example, 0.1 to 20 mol%.

More specifically, the amount of sulfonic acid group modification of the sulfonic acid group-modified PVA is preferably 0.1 to 6 mol%, more preferably 1 to 5 mol%, from the viewpoint of improving chemical resistance and water solubility. From a similar viewpoint, the amount of pyrrolidone ring group modification of the pyrrolidone ring group-modified PVA is preferably 0.1 to 20 mol%, more preferably 0.5 to 10 mol%, and further preferably 1 to 5 mol%.

The amount of hydrophilic group modification, the amount of sulfonic acid group modification, or the amount of pyrrolidone ring group modification respectively means the ratio of the number of moles of the hydrophilic group, the sulfonic acid group, or the pyrrolidone ring group to the total number of moles of the constituent unit of the modified PVA.

In the present invention, the PVA resin preferably comprises modified PVA. The modified PVA is preferably a modified PVA modified with a hydrophilic group as described above, and especially, from the viewpoint of making chemical resistance and water solubility good, modified PVA modified with a sulfonic acid group or a pyrrolidone ring group is more preferred. In other words, the PVA resin more preferably comprises either one or both of sulfonic acid group-modified PVA or pyrrolidone ring group-modified PVA. Among these, the PVA resin further preferably comprises sulfonic acid group-modified PVA.

The PVA resin preferably contains either one or both of sulfonic acid group-modified PVA and pyrrolidone ring group-modified PVA as described above, and the total amount of the content of these is preferably 30 to 100% by mass, more preferably 50 to 100% by mass, and further preferably 70 to 100% by mass based on the total amount of the PVA resin. The chemical product packaging film has better chemical resistance and water solubility by containing a predetermined amount or more of either one or both of sulfonic acid group-modified PVA and pyrrolidone ring group-modified PVA in this manner.

The sulfonic acid group-modified PVA and the pyrrolidone ring group-modified PVA may be used in combination with unmodified PVA, may be used in combination with another modified PVA, or may of course be used singly.

The degree of saponification of the PVA resin is preferably 80 to 99.9 mol%. When the degree of saponification is set in such a range, the water solubility required of the chemical product packaging film is easily ensured.

The preferred range of the degree of saponification of the PVA resin also differs depending on the presence or absence of modification and the type of the modifying group. For example, the degree of saponification of unmodified PVA is preferably 80 to 99.9 mol% as described above, and more preferably 80 to 95 mol%, further preferably 85 to 92 mol%, from the viewpoint of further improving water solubility.

On the other hand, for example, the degree of saponification of modified PVA such as pyrrolidone ring group-modified PVA and sulfonic acid group-modified PVA is preferably 80 to 99.9 mol% as described above, and more preferably 85 to 99 mol%, further preferably 90 to 98 mol%, from the viewpoint of improving chemical resistance and water solubility in a good balance.

The above degree of saponification is measured in accordance with JIS K6726. The degree of saponification represents the ratio of units actually saponified to vinyl alcohol units, among units to be converted to vinyl alcohol units by saponification.

The method for adjusting the degree of saponification is not particularly limited. The degree of saponification can be appropriately adjusted by saponification conditions, that is, hydrolysis conditions.

The degree of polymerization of the PVA is not particularly limited, but is preferably 400 or more, more preferably

700 or more, and further preferably 900 or more. The degree of polymerization of the PVA is preferably 2000 or less, more preferably 1800 or less, and further preferably 1500 or less. When the above degree of polymerization is set at the above lower limit value or more and the upper limit value or less, the viscosity of a PVA aqueous solution can be made moderate when the chemical product packaging film is formed, and further the water solubility of the PVA resin is easily made good. In addition, the strength of the chemical product packaging film is also easily made good. The above degree of polymerization is measured in accordance with JIS K6726.

The viscosity of the PVA measured as a 4% by mass aqueous solution at 20°C is preferably 3 mPa·s or more, more preferably 8 mPa·s or more. The viscosity is preferably 30 mPa·s or less, more preferably 20 mPa·s or less. Such viscosity can be measured in accordance with JIS K 6726.

The chemical product packaging film is mainly composed of the PVA resin. The content of the PVA resin is specifically preferably 70% by mass or more, more preferably 75% by mass or more, and further preferably 80% by mass or more based on the total amount of the chemical product packaging film. The content of the PVA resin is preferably 98% by mass or less, more preferably 96% by mass or less, and further preferably 93% by mass or less. When the content of the PVA resin is set at the above lower limit or more, the chemical product packaging film easily has good water solubility. When the content of the PVA resin is set at the above upper limit value or less, additives such as water-soluble starch and a plasticizer can be moderately blended in the chemical product packaging film.

(Plasticizer)

The chemical product packaging film of the present invention further contains a plasticizer. The chemical product packaging film has moderate flexibility and improved water solubility by containing the plasticizer. In addition, the glass transition point lowers, and the durability at low temperature improves.

The plasticizer is not particularly limited. Examples of the plasticizer can include polyhydric alcohols such as glycerin, diglycerin, diethylene glycol, trimethylolpropane, triethylene glycol, dipropylene glycol, and propylene glycol, polyethers such as polyethylene glycol and polypropylene glycol, phenol derivatives such as bisphenol A and bisphenol S, amide compounds such as N-methylpyrrolidone, compounds obtained by adding ethylene oxide to polyhydric alcohols such as glycerin, pentaerythritol, and sorbitol, and water. These may be used singly, or two or more of these may be used, but two or more of these are preferably used.

Among the above plasticizers, glycerin, trimethylolpropane, polyethylene glycol, polypropylene glycol, triethylene glycol, dipropylene glycol, and propylene glycol are preferred because the water solubility can be improved, and particularly, glycerin and trimethylolpropane are preferred particularly because the water solubility improvement effect is large.

The molecular weight of the plasticizer is preferably 90 or more, more preferably 92 or more, and preferably 1200 or less, more preferably 1000 or less.

The content of the plasticizer is preferably 3 to 30% by mass based on the total amount of the chemical product packaging film. By setting the content of the plasticizer within the above range, while the flexibility is made moderate, the water solubility is excellent, and the water solubility is easily well maintained over a long period. The content of the plasticizer is more preferably 5% by mass or more, further preferably 7% by mass or more, and still further preferably 10% by mass or more from the viewpoint of more easily exhibiting the above effect. The content of the plasticizer is more preferably 25% by mass or less, further preferably 23% by mass or less, and still further preferably 20% by mass or less.

(Other Additives)

The chemical product packaging film of the present invention may further appropriately contain additives usually used in a PVA film, such as a filler, a colorant, a perfume, an antifoaming agent, a release agent, and an ultraviolet absorbing agent, as required.

The thickness of the chemical product packaging film of the present invention is not particularly limited and is, for example, 5 to 150 μm. When the thickness is set at the above lower limit or more, the strength of the film can be increased. When the thickness is set at the above upper limit or less, the packaging properties and the heat sealing properties as a packaging film are good, and the productivity improves. From these viewpoints, the thickness of the chemical product packaging film is preferably 10 μm or more, more preferably 15 μm or more. The thickness of the chemical product packaging film is preferably 100 μm or less, more preferably 90 μm or less.

The chemical product packaging film of the present invention preferably has a tensile strength of 5 MPa or more and less than 30 MPa. When the tensile strength is within the above range, the chemical product packaging film has moderate flexibility and strechability and is easily used as a packaging material for various chemical products. The tensile strength is more preferably 5 MPa or more and less than 15 MPa in order to make flexibility and strechability better. The tensile strength means a value obtained by measurement by a method described in Examples described later.

The chemical product packaging film of the present invention is used for packaging various chemical products

and used, for example, for packaging various chemical products such as agricultural chemicals, industrial chemicals, dyes, detergents, fertilizers, cosmetics, sanitary products, and medicines. Among these, detergents are preferred. The chemical product is preferably a liquid, and the chemical product packaging film of the present invention is for packaging a liquid detergent. The liquid means a chemical product that is a liquid at normal temperature (25°C) and normal pressure (1 atmosphere).

The chemical product packaging film of the present invention has a degree of swelling of less than 20% for a liquid detergent packaged with the chemical product packaging film. When the degree of swelling is less than 20%, the tension of the film can be well maintained over a long period. From the viewpoint of maintaining the tension of the film better, the degree of swelling is more preferably 17% or less, still further preferably 15% or less, and still further preferably 13% or less.

The degree of swelling is preferably 1% or more, more preferably 2% or more, further preferably 3% or more, and still further preferably 5% or more from the viewpoint of making chemical resistance and water solubility good.

The degree of swelling is a value obtained by measurement by a method described in Examples described later using as a liquid detergent the same liquid detergent as packaged with chemical product packaging films.

[Package]

The present invention further provides a package. In the package of the present invention, the above chemical product packaging film is used as a packaging material for packaging a chemical product. The package of the present invention specifically comprises the above-described chemical product packaging film and a chemical product contained in the chemical product packaging film. The chemical product is appropriately selected from the group consisting of those listed above and is preferably a liquid detergent. In the package, the packaging material composed of the chemical product packaging film may be in such a form that the chemical product can be enclosed inside, and may be formed into, for example, a bag.

The method for forming the packaging material into a bag is not particularly limited, and, for example, a bag may be formed by folding one film and adhering the periphery, by superimposing two films and adhering the periphery, or by another method. The method for adhering the film is not particularly limited, and the film may be adhered by heat sealing, or an adhesive The chemical product packaging film constituting the bag may be appropriately subjected to shaping.

The liquid detergent to be contained in the package of the present invention is not particularly limited and comprises, for example, a polyhydric alcohol. A specific polyhydric alcohol may be one that can be used in a liquid detergent. Examples of the specific polyhydric alcohol include dihydric alcohols such as ethylene glycol, propylene glycol, butylene glycol, 1,2-pentanediol, 1,2-hexanediol, and 1,6-hexanediol, trihydric alcohols such as glycerin, tetrahydric alcohols such as erythritol and pentaerythritol, and hexahydric alcohols such as sorbitol. Among these, propylene glycol and glycerin are preferred. One polyhydric alcohol may be used singly, or two or more polyhydric alcohols may be used in combination. A polyhydric alcohol is generally used as a stabilizer in a liquid detergent. The content of the polyhydric alcohol is preferably 10 to 50% by mass, more preferably 15 to 45% by mass, based on the total amount of the liquid detergent.

Water is generally contained in the liquid detergent. The amount of water in the liquid detergent is not particularly limited and is, for example, 3 to 50% by mass, preferably 5 to 20% by mass. The amount of water is a value obtained by using a coulometric titration Karl Fischer water measuring apparatus and heating 0.05 g of a sample at 140°C.

A solvent such as a monohydric alcohol may be contained in the liquid detergent. One or more components selected from the group consisting of a surfactant such as a soap or a fatty acid salt, a dispersing agent, a sequestering agent, a perfume, an enzyme, a water softening agent, a fluorescent brightening agent, a colorant, a bleaching agent, a foam adjusting agent, an antiredeposition agent, and pH adjusting agent, are generally blended in the liquid detergent.

[Method for Manufacturing Chemical product Packaging Film]

The method for manufacturing the chemical product packaging film is not particularly limited. Examples of the method include a method of diluting PVA, a plasticizer, water-soluble starch, and other additives added as required, with water to obtain a PVA aqueous solution, flow casting the PVA aqueous solution on a supporting member, and drying the PVA aqueous solution to form a film. The PVA aqueous solution may be flow cast after being appropriately passed through a filter.

Examples of the method for flow casting the PVA aqueous solution on a supporting member include a casting method, a roll coating method, a lip coating method, a spin coating method, a screen coating method, a fountain coating method, a dipping method, and a spraying method.

In the PVA aqueous solution, the components other than water are diluted with water at a concentration of preferably 35% by mass or less, more preferably 25% by mass or less, and further preferably 20% by mass or less based on the total amount of the aqueous solution. The components other than water may be diluted with water at a concentration of preferably 8% by mass or more, more preferably 10% by mass or more, and further preferably 12% by mass or more.

When the concentration is within the above range, the viscosity of the PVA aqueous solution is moderate, and the flow casting of the PVA aqueous solution becomes easier. By setting the concentration at the lower limit value or more, the drying time shortens, and a chemical product packaging film having good quality is easily obtained.

The above supporting member may be one that can retain the PVA aqueous solution on the surface thereof during the flow casting of the PVA aqueous solution and support the obtained film. Examples of the material of the above supporting member include polyolefins, polyesters, and acrylic resins. A supporting member comprising a material other than these may be used. The supporting member may be in the form of a sheet or a film but may have another shape.

The drying after the above PVA aqueous solution is cast may be performed by any method. Examples of the method include a method of natural drying and a method of heating and drying at a temperature equal to or less than the glass transition temperature of the PVA resin.

The formed film is peeled from the supporting member and used. A known treatment performed on a film, such as embossing, stretching, and annealing treatment, may be appropriately performed on the formed film.

The embossing is performed, for example, by passing the film between an embossing roll on the surface of which irregularities are formed and a backup roller.

The stretching is performed, for example, by stretching using a roll, stretching using a tenter, stretching using a winding apparatus, stretching using drying shrinkage, or stretching combining these. The stretching may be performed, for example, at a stretching ratio of about 1.05 to 3 times.

As described above, according to the present invention, it is possible to improve the chemical resistance of the chemical product packaging film, and maintain water solubility well over a long period, while maintaining the tension of the chemical product packaging film over a long period, without causing problems in the manufacturing process.

## Examples

The present invention will be described in more detail below by Examples, but the present invention is not limited in any way by these examples.

The methods for evaluating starch and a chemical product packaging film are as follows.

### [Solubility of Starch in Water]

10 g of starch, 90 g of water, and a magnet having a length of 4 cm were placed in a 100 ml beaker, and stirred by a magnet stirrer at 500 rpm for 30 minutes while the water temperature was kept at 50°C. Then, the mixture was filtered through a filter made of nylon (SNP-300, filtration accuracy: 30 μm) set in Labo Disk Holder LDH manufactured by ROKI TECHNO CO., LTD., and the starch remaining on the mesh was visually observed. Further, the uniformity of the starch aqueous solution when the filtrate (starch aqueous solution) was allowed to stand at 23°C for 24 hours was visually observed. Based on these observation results, whether the starch had solubility or not was determined according to the following evaluation criteria:

The starch has solubility: There is no residue on the mesh, and the starch aqueous solution is uniform.

The starch has no solubility: There is a residue on the mesh, or the starch precipitates in the aqueous solution even if there is no residue.

### [Solubility]

A certain amount of starch, 100 g of 23°C water, and a magnet having a length of 4 cm were placed in a 100 ml beaker, and stirred by a magnet stirrer at 500 rpm for 10 minutes; after that, the temperature of the water was raised to 50°C, and the mixture was further stirred for 30 minutes while the water temperature was kept at 50°C. Then, the starch aqueous solution was filtered through a filter made of nylon (SNP-300, filtration accuracy: 30 μm) while keeping the temperature thereof at 50°C to obtain a filtrate. 3 g of the thus-obtained filtrate was dispensed to an aluminum cap with handle (size of No. 4), and dried at 80°C for 1 hour by a forced circulation type thermostatic oven (manufactured by Isuzu Seisakusho Co., Ltd); after that, the weight of starch left in the aluminum cap was measured to calculate the amount of the starch dissolved in 100g of water, and thereby, the solubility was determined.

### [Evaluation of Tension of Film (Degree of Swelling)]

An obtained chemical product packaging film was exposed to an environment of 23°C and 50% RH for 24 hours, and then the chemical product packaging film was cut to 4 cm (TD direction) × 5 cm (MD direction). The thickness of the film was measured at 12 points, and the average thickness (T1) was calculated. Next, the cut film and 35 ml of a liquid detergent were added to a 50 ml screw tube bottle and left standing in a state of immersion at 23°C for 7 days. Then, the film was removed, and the liquid detergent adhering to the surface was wiped off with KIMTOWEL (trade name, manufactured by

Nippon Paper Crecia Co., Ltd.). The thickness of the film after swelling was measured at 12 points, and the average thickness after swelling (T2) was calculated. The degree of swelling was calculated from the obtained average thicknesses T1 and T2 by the following formula. It is meant that the smaller the degree of swelling is, the better the evaluation of the tension of the chemical product packaging film is.

In the present Examples and Comparative Examples, as the liquid detergent, a mixed liquid detergent prepared by adding water to Persil Non-Bio (trade name. manufactured by Unilever, amount of water: 9% by mass) so that the amount of water in the liquid detergent was 14% by mass was used. For the amount of water, a value obtained by using a coulometric titration Karl Fischer water measuring apparatus (manufactured by Kyoto Electronics Manufacturing Co., Ltd., MKC-610) and heating 0.05 g of a sample at 140°C was used.

$$\text{degree of swelling (\%)} = (T2 - T1)/T1 \times 100$$

1: a degree of swelling of less than 15%
2: a degree of swelling of 15% or more and less than 20%
3: a degree of swelling of 20% or more

[Hardness of Film]

An obtained chemical product packaging film was exposed to an environment of a temperature of 23°C and 50% RH for 24 hours and then cut to a size of 100 mm × 15 mm. Then, the tensile test of the cut chemical product packaging film was performed under the conditions of a temperature of 23°C, a relative humidity of 50% RH, and a tensile speed of 100 mm/min using a tester, AUTOGRAPH, "AGS-H" manufactured by SHIMADZU CORPORATION, and the tensile strength at an elongation of 100% was measured. Based on the measurement result, evaluation was performed on the following scale of 1 to 3:

1: 5 MPa or more and less than 15 MPa
2: 15 MPa or more and less than 30 MPa
3: less than 5 MPa or 30 MPa or more

[Water Solubility after Chemical Resistance Test]

An obtained chemical product packaging film was exposed to an environment of 23°C and 50% RH for 24 hours, and then the chemical product packaging film was cut to 4 cm (TD direction) × 5 cm (MD direction). Next, the cut film and 35 ml of a mixed liquid detergent (amount of water: 14% by mass) obtained by adding 5.2 g of water to 90 g of a liquid detergent (manufactured by Unilever, trade name "Persil Non-Bio", amount of water: 9% by mass) were added to a 50 ml screw tube bottle and left standing in a state of immersion at 55°C for 7 days.

Then, the film was removed, and the mixed liquid detergent adhering to the surface was wiped off with KIMTOWEL. The film was cut to a size of 3 cm × 3 cm as a chemical resistance evaluation film, weighed, and then fixed to a jig. Then, 500 ml of water was placed in a 500 ml beaker. While the water was stirred by a magnet stirrer so that the bottom of the vortex reached the mark of 400 ml, the water temperature was kept at 23°C, and the time when it became impossible to visually recognize the residue of the film from the jig was measured as dissolution time.

The components used in the Examples and the Comparative Examples are as follows:

PVA (1): unmodified PVA, degree of polymerization: 1300, degree of saponification: 88.0 mol%, 4% by mass aqueous solution viscosity (20°C): 14 mPa·s
PVA (2): sulfonic acid group-modified PVA, degree of polymerization: 1200, degree of saponification: 95.4 mol%, amount of sulfonic acid group modification: 4 mol%, 4% by mass aqueous solution viscosity (20°C): 12.1 mPa·s
PVA (3): pyrrolidone ring group-modified PVA, degree of polymerization: 1000, degree of saponification: 95.8 mol%, amount of pyrrolidone ring group modification: 4 mol%, 4% by mass aqueous solution viscosity (20°C): 10 mPa·s
Water-soluble starch (1): hydroxyethylated starch, trade name "Staramic 747 manufactured by TATE & LYLE, solubility in water: adequate, solubility 18 g/100 $gH_2O$,
Water-soluble starch (2): hydroxypropylated starch, manufactured by Nippon Starch Chemical Co., Ltd., trade name "Amycol NS", solubility in water: adequate, solubility 20 g/100 $gH_2O$,
Water-soluble starch (3): hydroxyethylated starch, trade name "Staramic 105 manufactured by TATE & LYLE, solubility in water: adequate, solubility 13 g/100 $gH_2O$,
Cornstarch: manufactured by Oji Cornstarch Co., Ltd., trade name "Cornstarch Y", solubility in water: not-adequate, solubility 0 g/100 $gH_2O$,

Pregelatinized starch: manufactured by Oji Cornstarch Co., Ltd., trade name "Conlets 100", solubility in water: not-adequate, solubility 0 g/100 $gH_2O$,
GL: glycerin, reagent, manufactured by Wako Pure Chemical Industries, Ltd., molecular weight: 92
TMP: trimethylolpropane, reagent, manufactured by Wako Pure Chemical Industries, Ltd., molecular weight: 134

(Example 1 and Comparative Example 1)

Unmodified PVA was used as PVA as shown in Table 1, and components were dissolved or dispersed in water so as to provide a blending ratio shown in Table 1, based on a chemical product packaging film, thereby preparing a PVA aqueous solution having a concentration of 20% by mass.

The obtained PVA aqueous solution was passed through a filter having an opening of 20 μm, and then applied onto a polyethylene terephthalate (PET) film (thickness: 50 μm), a supporting member, by a lip coater method. Then, the PVA aqueous solution was dried at 70°C for 10 minutes and then at 110°C for 10 minutes to form a chemical product packaging film having a thickness of 76 μm on the supporting member. The chemical product packaging film was peeled from the supporting member, and various evaluation tests were carried out.

Table 1

| | Blending (% by mass) | | | | Evaluation of tension of film | | Film hardness | | After chemical resistance test |
|---|---|---|---|---|---|---|---|---|---|
| | PVA (1) | Water-soluble starch (1) | Plasticizer | | Degree of swelling (%) | Determination | Tensile strength (MPa) | Determination | Dissolution time (seconds) |
| | | | GL | TMP | | | | | |
| Example 1 | 83.5 | 1 | 13 | 2.5 | 6 | 1 | 8.1 | 1 | 600 |
| Comparative Example 1 | 84.5 | | 13 | 2.5 | 1 | 1 | 7.9 | 1 | 1800 |

* % by mass in Table 1 and Table 2 described later represents % by mass based on a chemical product packaging film.

As is clear from the results in Table 1, in Example 1 in which the PVA comprised unmodified PVA, by the use of water-soluble starch having a predetermined solubility, the degree of swelling decreased, and thus the tension of the chemical product packaging film was maintained over a long period. In addition, it can be understood that compared with Comparative Example 1 in which no water-soluble starch is used, the dissolution time after the chemical resistance test is short, and the chemical resistance is improved.

(Examples 2 to 12 and Comparative Examples 2 to 6)

Modified PVA or unmodified PVA and modified PVA were used as PVA as shown in Table 2, and components were dissolved or dispersed in water so as to provide a blending ratio shown in Table 2, based on a chemical product packaging film, thereby preparing a PVA aqueous solution having a concentration of 20% by mass. Then, as in Example 1, a chemical product packaging film was formed, and then various evaluations were carried out.

Table 2

| | Blending (% by mass) | | | | | | | | | | Evaluation of tension of film | | Film hardness | | After chemical resistance test |
|---|---|---|---|---|---|---|---|---|---|---|---|---|---|---|---|
| | PVA resin | | | Starch | | | | | Plasticizer | | | | | | |
| | PVA (1) | PVA (2) | PVA (3) | Water-soluble starch (1) | Water-soluble starch (2) | Water-soluble starch (3) | Cornstarch | Pregela tinized starch | GL | TMP | Degree of swelling (%) | Determination | Tensile strength (MPa) | Determination | Dissolution time (seconds) |
| Example 2 | | 84.0 | | | 0.5 | | | | 13 | 2.5 | 8 | 1 | 9.5 | 1 | 330 |
| Example 3 | | 82.5 | | 2 | | | | | 13 | 2.5 | 16 | 2 | 9.0 | 1 | 100 |
| Example 4 | 56.8 | 26.7 | | 1 | | | | | 13 | 2.5 | 9 | 1 | 9.3 | 1 | 300 |
| Example 5 | 54.7 | 25.8 | | | 4 | | | | 13 | 2.5 | 19 | 2 | 8.7 | 1 | 90 |
| Example 6 | 38.0 | 38.0 | | 1 | | | | | 19.5 | 3.5 | 12 | 1 | 6.8 | 1 | 241 |
| Example 7 | 45.6 | 45.6 | | 1 | | | | | 6.5 | 1.3 | 10 | 1 | 19.0 | 2 | 254 |
| Example 8 | | 56.8 | 26.7 | | 1 | | | | 13 | 2.5 | 11 | 1 | 9.1 | 1 | 220 |
| Example 9 | | 94.5 | | 1 | | | | | 4.5 | 0 | 10 | 1 | 24 | 2 | 264 |
| Example 10 | | 71.1 | | 1 | | | | | 23.4 | 4.5 | 14 | 1 | 5.9 | 1 | 179 |
| Example 11 | 56.8 | 26.7 | | | 1 | | | | 13 | 2.5 | 10 | 1 | 9.3 | 1 | 292 |
| Example 12 | 56.8 | 26.7 | | | | 1 | | | 13 | 2.5 | 8 | 1 | 9.2 | 1 | 320 |
| Comparative Example 2 | | 84.5 | | | | | | | 13 | 2.5 | 7 | 1 | 9.7 | 1 | 360 |
| Comparative Example 3 | | 83.5 | | | | | 1 | | 13 | 2.5 | Clogging in filter, impossible to fabricate film | | | | |
| Comparative Example 4 | | 83.5 | | | | | | 1 | 13 | 2.5 | Clogging in filter, impossible to fabricate film | | | | |
| Comparative Example 5 | | 80.0 | | 4.5 | | | | | 13 | 2.5 | 23 | 3 | 8.5 | 1 | 95 |
| Comparative Example 6 | 56.8 | 26.7 | | | | | 1 | | 13 | 2.5 | Clogging in filter, impossible to fabricate film | | | | |

As is clear from the results in Table 2, also in Examples 2 to 12 in which the PVA comprised modified PVA, by the use of water-soluble starch having a predetermined solubility, the degree of swelling decreased, and thus the tension of the chemical product packaging film was maintained over a long period. In addition, it can be understood that in Examples 2 to 12, compared with Comparative Example 2 in which no water-soluble starch is used, the dissolution time after the chemical resistance test is short, and the water solubility can be well maintained over a long period.

On the other hand, in Comparative Examples 3, 4 and 6 in which starch having no predetermined solubility was used, clogging occurred in the filter due to the starch, and a film could not be fabricated. In addition, in Comparative Example 5 in which more than 4% by mass of water-soluble starch was contained, the degree of swelling increased, and the tension of the chemical product packaging film could not be maintained over a long period.

## Claims

1. A chemical product packaging film comprising a polyvinyl alcohol resin, a plasticizer, and water-soluble starch,

   the water-soluble starch having solubility in which the water-soluble starch dissolves when stirred in water having a concentration of the starch of 10% by mass at a temperature of 50°C for 30 minutes, a content of the water-soluble starch being 4% by mass or less based on the total mass of the chemical product packaging film, wherein the chemical product packaging film is for packaging a liquid detergent, and
   the chemical product packaging film has a degree of swelling, measured according to the method in the description, of less than 20% for the liquid detergent.

2. The chemical product packaging film according to claim 1, wherein the polyvinyl alcohol resin comprises at least one selected from the group consisting of sulfonic acid group-modified polyvinyl alcohol and pyrrolidone ring-modified polyvinyl alcohol.

3. The chemical product packaging film according to claim 2, wherein an amount of sulfonic acid group modification of the sulfonic acid group-modified polyvinyl alcohol is 0.1 to 6 mol%.

4. The chemical product packaging film according to claim 2, wherein an amount of pyrrolidone ring group modification of the pyrrolidone ring group-modified polyvinyl alcohol is 0.1 to 20 mol%.

5. The chemical product packaging film according to any one of claims 2 to 4, wherein the pyrrolidone ring group-modified polyvinyl alcohol and the sulfonic acid group-modified polyvinyl alcohol each have a degree of saponification of 80 to 99.9 mol%.

6. The chemical product packaging film according to any one of claims 1 to 5, wherein a content of the plasticizer is 3 to 30% by mass based on the total mass of the chemical product packaging film.

7. The chemical product packaging film according to any one of claims 1 to 6, wherein the water-soluble starch is at least one selected from the group consisting of hydroxyethylated starch and hydroxypropylated starch.

8. The chemical product packaging film according to any one of claims 1 to 7, wherein a solubility of the water-soluble starch, measured according to the method in the description, is 11.1 to 25 g/100 $gH_{2O}$.

9. A package comprising the chemical product packaging film according to any one of claims 1 to 8 and a chemical product contained in the chemical product packaging film.

10. The package according to claim 9, wherein the chemical product is a liquid detergent.

## Patentansprüche

1. Verpackungsfolie für chemische Produkte, umfassend ein Polyvinylalkoholharz, einen Weichmacher und wasserlösliche Stärke,

   wobei die wasserlösliche Stärke eine Löslichkeit aufweist, bei der sich die wasserlösliche Stärke auflöst, wenn sie in Wasser mit einer Stärkekonzentration von 10 Masse-% bei einer Temperatur von 50°C 30 Minuten lang gerührt

wird, wobei der Gehalt der wasserlöslichen Stärke 4 Masse-% oder weniger, bezogen auf die Gesamtmasse der Verpackungsfolie für chemische Produkte, beträgt, wobei die Verpackungsfolie für chemische Produkte zum Verpacken eines flüssigen Reinigungsmittels dient, und
die Verpackungsfolie für chemische Produkte einen gemäß dem Verfahren in der Beschreibung gemessenen Quellungsgrad von weniger als 20% für das flüssige Reinigungsmittel aufweist.

**2.** Verpackungsfolie für chemische Produkte nach Anspruch 1, wobei das Polyvinylalkoholharz mindestens eines, ausgewählt aus der Gruppe bestehend aus mit Sulfonsäuregruppen modifiziertem Polyvinylalkohol und mit Pyrrolidonring modifiziertem Polyvinylalkohol, umfasst.

**3.** Verpackungsfolie für chemische Produkte nach Anspruch 2, wobei die Menge der Sulfonsäuregruppenmodifikation des mit Sulfonsäuregruppen modifizierten Polyvinylalkohols 0,1 bis 6 Mol-% beträgt.

**4.** Verpackungsfolie für chemische Produkte nach Anspruch 2, wobei die Menge der Pyrrolidonringgruppenmodifikation des mit Pyrrolidonringgruppen modifizierten Polyvinylalkohols 0,1 bis 20 Mol-% beträgt.

**5.** Verpackungsfolie für chemische Produkte nach einem der Ansprüche 2 bis 4, wobei der mit Pyrrolidonringgruppen modifizierte Polyvinylalkohol und der mit Sulfonsäuregruppen modifizierte Polyvinylalkohol jeweils einen Verseifungsgrad von 80 bis 99,9 Mol-% aufweisen.

**6.** Verpackungsfolie für chemische Produkte nach einem der Ansprüche 1 bis 5, wobei der Weichmachergehalt 3 bis 30 Masse-%, bezogen auf die Gesamtmasse der Verpackungsfolie für chemische Produkte, beträgt.

**7.** Verpackungsfolie für chemische Produkte nach einem der Ansprüche 1 bis 6, wobei die wasserlösliche Stärke mindestens eine, ausgewählt aus der Gruppe bestehend aus hydroxyethylierter Stärke und hydroxypropylierter Stärke, ist.

**8.** Verpackungsfolie für chemische Produkte nach einem der Ansprüche 1 bis 7, wobei die Löslichkeit der wasserlöslichen Stärke, gemessen nach dem Verfahren in der Beschreibung, 11,1 bis 25 g/100 g $H_2O$ beträgt.

**9.** Verpackung, umfassend die Verpackungsfolie für chemische Produkte nach einem der Ansprüche 1 bis 8 und ein in der Verpackungsfolie für chemische Produkte enthaltenes chemisches Produkt.

**10.** Verpackung nach Anspruch 9, wobei das chemische Produkt ein flüssiges Reinigungsmittel ist.

## Revendications

**1.** Film d'emballage de produit chimique comportant une résine d'alcool polyvinylique, un plastifiant et de l'amidon soluble dans l'eau,

l'amidon soluble dans l'eau présentant une solubilité, dans lequel l'amidon soluble dans l'eau se dissout lorsqu'il est agité dans de l'eau ayant une concentration de l'amidon de 10 % en masse à une température de 50 °C pendant 30 minutes, une teneur de l'amidon soluble dans l'eau étant de 4 % en masse ou moins sur la base de la masse totale du film d'emballage de produit chimique, dans lequel
le film d'emballage de produit chimique est destiné à conditionner un détergent liquide, et
le film d'emballage de produit chimique a un degré de gonflement, mesuré conformément au procédé de la description, inférieur à 20 % pour le détergent liquide.

**2.** Film d'emballage de produit chimique selon la revendication 1, dans lequel la résine d'alcool polyvinylique comporte au moins un élément choisi parmi le groupe constitué d'un alcool polyvinylique modifié par un groupe acide sulfonique et d'un alcool polyvinylique modifié par un groupe pyrrolidone cyclique.

**3.** Film d'emballage de produit chimique selon la revendication 2, dans lequel une quantité de modification du groupe acide sulfonique de l'alcool polyvinylique modifié par un groupe acide sulfonique est de 0,1 à 6 % en mole.

**4.** Film d'emballage de produit chimique selon la revendication 2, dans lequel une quantité de modification du groupe pyrrolidone cyclique de l'alcool polyvinylique modifié par un groupe pyrrolidone cyclique est de 0,1 à 20 % en mole.

5. Film d'emballage de produit chimique selon l'une quelconque des revendications 2 à 4, dans lequel l'alcool polyvinylique modifié par un groupe pyrrolidone cyclique et l'alcool polyvinylique modifié par un groupe acide sulfonique ont chacun un degré de saponification de 80 à 99,9 % en mole.

6. Film d'emballage de produit chimique selon l'une quelconque des revendications 1 à 5, dans lequel une teneur du plastifiant est de 3 à 30 % en masse sur la base de la masse totale du film d'emballage de produit chimique.

7. Film d'emballage de produit chimique selon l'une quelconque des revendications 1 à 6, dans lequel l'amidon soluble dans l'eau est au moins un élément choisi parmi le groupe constitué d'amidon hydroxyéthylé et d'amidon hydroxypropylé.

8. Film d'emballage de produit chimique selon l'une quelconque des revendications 1 à 7, dans lequel une solubilité de l'amidon soluble dans l'eau, mesurée conformément au procédé de la description, est de 11,1 à 25 g/100 g de $H_2O$.

9. Emballage comportant le film d'emballage de produit chimique selon l'une quelconque des revendications 1 à 8 et un produit chimique contenu dans le film d'emballage de produit chimique.

10. Emballage selon la revendication 9, dans lequel le produit chimique est un détergent liquide.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2017043510 A
- JP 2002053727 A
- US 2017218146 A1
- WO 2017043510 A1
- JP 2002 A
- JP 53727 A